# EUROPÄISCHE PATENTSCHRIFT

(11) **EP 1 307 750 B1**
(45) Veröffentlichungstag und Bekanntmachung des Hinweises auf die Patenterteilung: **13.12.2006**
(21) Anmeldenummer: 01956366.7
(22) Anmeldetag: 21.07.2001
(51) Int. Cl.: G01P 15/125, G01P 15/08, G01P 1/02

(54) **MIKROMECHANISCHES BAUELEMENT**
MICROMECHANICAL COMPONENT
COMPOSANT MICROMECANIQUE

(30) Priorität: 04.08.2000 DE 10038099
(43) Veröffentlichungstag der Anmeldung: 07.05.2003
(73) Patentinhaber: ROBERT BOSCH GMBH, 70442 Stuttgart (DE)
(72) Erfinder: KURLE, Juergen, 72766 Reutlingen (DE); WEIBLEN, Kurt, 72555 Metzingen (DE); PINTER, Stefan, 72762 Reutlingen (DE)
(86) Internationale Anmeldenummer: PCT/DE2001/002782
(87) Internationale Veröffentlichungsnummer: WO 2002/012906

(56) Entgegenhaltungen:
- DE-A- 19 526 903
- DE-A- 19 530 510
- US-A- 5 734 106
- US-A- 5 895 853
- PATENT ABSTRACTS OF JAPAN vol. 1997, no. 09, 30. September 1997 (1997-09-30) -& JP 09 127151 A (MURATA MFG CO LTD), 16. Mai 1997 (1997-05-16)
- PATENT ABSTRACTS OF JAPAN vol. 1998, no. 04, 31. März 1998 (1998-03-31) -& JP 09 318656 A (HITACHI LTD), 12. Dezember 1997 (1997-12-12)

## Beschreibung

### Stand der Technik

Die Erfindung geht aus von einem mikromechanischen Bauelement nach der Gattung des unabhängigen Patentanspruchs. Es sind bereits mikromechanische Bauelemente bekannt, bei denen bewegliche Strukturen vorgesehen sind, die parallel zur Oberfläche des Substrats beweglich sind. Diese Strukturen sind von einem Rahmen umgeben, auf dem eine Abdeckkappe befestigt ist.

Die Druckschrift JP09127151 offenbart ein mikromechanisches Bauelement mit einer parallel zu einer Substratoberfläche beweglichen Struktur. Die Abdeckkappe des Bauelements weist Bereiche größerer Dicke auf, die als Anschlag für Bewegungen der Struktur senkrecht zur Substratoberfläche dienen.
Die Druckschrift DE19526903A1 offenbart ein mikromechanisches Bauelement mit einer von einem Rahmen umgebenen parallel zu einer Substratoberfläche beweglichen Struktur, dessen Abdeckkappe als Anschlag für Bewegungen der Struktur senkrecht zur Substratoberfläche dient, und bei dem über die Dicke der hermetischen Verbindungsschicht zwischen Rahmen und Abdeckkappe die wirksame Auslenkung der Struktur senkrecht zur Substratoberfläche beeinflusst werden kann.
Die Druckschrift US5895853A offenbart ein mikromechanisches Bauelement mit einer beweglichen Struktur, deren Rahmen über Verbindungsschichten, deren Dicke durch Abstandskugeln festgelegt ist, zwischen einer Abdeckkappe und einem Substrat angebracht ist.

### Vorteile der Erfindung

Das erfindungsgemäße mikromechanische Bauelement mit den Merkmalen des unabhängigen Patentanspruchs hat demgegenüber den Vorteil, dass die Auslenkungen des beweglichen Elements in einer Richtung senkrecht zur Oberfläche des Substrats begrenzt sind. Durch diese Maßnahme werden übergroße Auslenkungen des beweglichen Elements vermieden. Durch diese Maßnahme wird die Betriebssicherheit des mikromechanischen Bauelements erhöht.

Durch die in den abhängigen Patentansprüchen aufgeführten Maßnahmen sind vorteilhafte Weiterbildungen und Verbesserungen des mikromechanischen Bauelements nach dem unabhängigen Patentanspruch möglich. Besonders einfach wird die Abdeckkappe durch Einätzen von Ausnehmungen in einer Platte erreicht. Besonders geeignet ist dabei plattenförmiges Material aus Silizium. Durch zusätzliche Schichten im Bereich des Anschlags kann die Auslenkung des beweglichen Elements weiter reduziert werden. Die Verbindung der Abdeckkappe mit dem Rahmen erfolgt besonders einfach durch zusätzliche Schichten. Durch Einbringen von Abstandskügelchen kann die Dicke dieser Verbindungsschichten genau kontrolliert werden.

### Zeichnungen

Ausführungsbeispiele der Erfindung sind in den Zeichnungen dargestellt und in der nachfolgenden Beschreibung näher erläutert. Es zeigen Figur 1 eine Aufsicht auf ein Substrat, Figur 2 einen Querschnitt durch ein mikromechanisches Bauelement, Figur 3 eine Unteransicht einer Abdeckkappe, Figur 4 eine Detailansicht eines Verbindungsbereichs und Figur 5 einen weiteren Querschnitt durch ein mikromechanisches Bauelement.

### Beschreibung

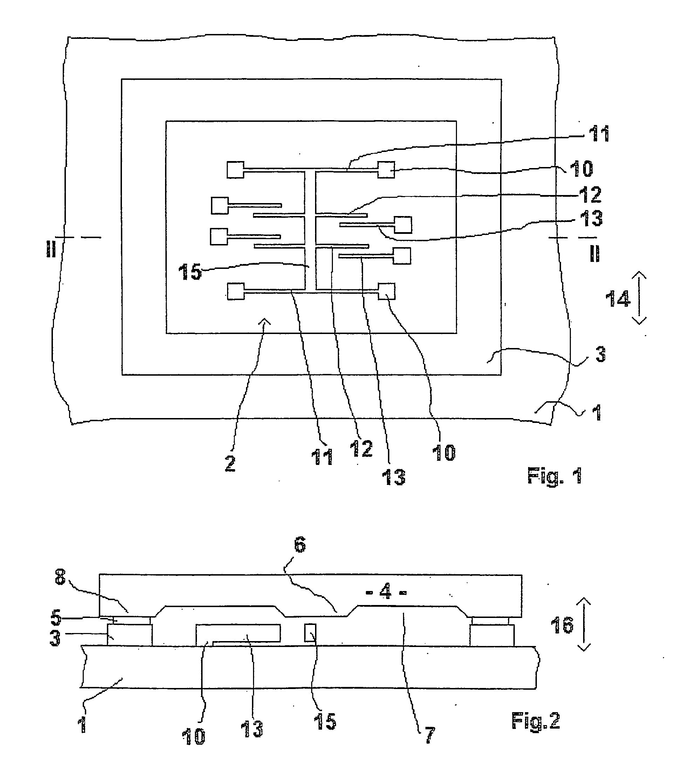

In der Figur 1 wird eine Aufsicht auf ein Substrat 1 gezeigt, auf dem eine bewegliche Struktur 2 angeordnet ist. Bei dem Substrat 1 handelt es sich vorzugsweise um ein Siliziumsubstrat, auf dem eine bewegliche Struktur 2 aus Polysilizium angeordnet ist. Die bewegliche Struktur 2 ist durch Verankerungsblöcke 10 fest mit dem Substrat 1 verbunden. An derartigen Verankerungsblöcken 10 sind Biegefedern 11 befestigt, die eine seismische Masse 15 tragen. Die in der Figur 1 gezeigte seismische Masse 15 ist durch vier Biegefedern 11 an vier Verankerungsblöcken 10 befestigt. An der seismischen Masse 15 sind bewegliche Elektroden 12 befestigt, die in etwa senkrecht zur länglichen seismischen Masse 15 angeordnet sind. Den beweglichen Elektroden 12 gegenüberliegend sind feststehende Elektroden 13 angeordnet, die ihrerseits wieder durch Verankerungsblöcke 10 mit dem Substrat 1 fest verbunden sind.

Die bewegliche Struktur 2 wirkt als Beschleunigungssensor, dessen Meßachse durch den Pfeil 14 vorgegeben ist. Bei einer Beschleunigung in der Achse 14 wirkt eine Kraft auf die seismische Masse 15. Da die seismische Masse 15, die Biegefedern 11 und die beweglichen Elektroden 12 nicht mit dem Substrat 1 verbunden sind, erfolgt aufgrund dieser Kraftwirkung auf die seismische Masse 15 eine Verbiegung der Biegefedern 11, d.h. die seismische Masse 15 und entsprechend damit auch die beweglichen Elektroden 12 werden in Richtung der Achse 14 ausgelenkt. Diese Auslenkung erfolgt somit parallel zur Oberfläche des Substrats 1. Durch die Auslenkung ändert sich der Abstand zwischen den beweglichen Elektroden 12 und den feststehenden Elektroden 13. Wenn man die feststehenden Elektroden 13 und die beweglichen Elektroden 12 als Plattenkondensator verwendet, lässt sich durch die Änderung der Kapazität zwischen diesen beiden Elektroden die Auslenkung der seismischen Masse nachweisen. Da diese Auslenkung proportional zur anliegenden Beschleunigung in der Achse 14 ist, lässt sich durch die in der Figur 1 gezeigte Vorrichtung die Beschleunigung messen. Bei der in der Figur 1 gezeigten Vorrichtung handelt es sich somit um einen Beschleunigungssensor. Die Erfindung ist jedoch nicht auf Beschleunigungssensoren beschränkt, sondern ist für jede bewegliche Struktur, die auf der Oberfläche eines Substrats 1 angeordnet ist, zu verwenden.

Die bewegliche Struktur 2 auf der Oberfläche des Substrats 1 wird von einem Rahmen 3 umgeben. Dieser Rahmen 3 ist als Verankerung für eine Abdeckkappe 4 vorgesehen, die in der Figur 1 nicht dargestellt ist, um eine Aufsicht auf die bewegliche Struktur 2 zu erlauben. Die Kappe 4 wird jedoch in der Figur 2 dargestellt. In der Figur 2 wird ein Querschnitt durch ein mikromechanisches Bauelement gezeigt, welches einem Querschnitt entlang der Linie II-II der Figur 1 entspricht. Da in der Figur 1 jedoch die Abdeckkappe 4 nicht gezeigt wird, entspricht die Figur 2 nur bezüglich des Substrats 1, des Rahmens 3 und der beweglichen Struktur 2 einem Querschnitt durch die Figur 1.

In der Figur 2 wird im Querschnitt das Substrat 1 gezeigt, auf dem ein Verankerungsblock 10 befestigt ist, an dem wiederum eine feststehende Elektrode 13 befestigt ist. Auch die feststehende Elektrode 13 ist hier nur über den Verankerungsblock 10 mit dem Substrat 1 verbunden, so dass zwischen der feststehenden Elektrode 13 und dem Substrat 1 ein Zwischenraum ist. Die geometrischen Abmessungen der feststehenden Elektrode 13 sind jedoch so ausgelegt, dass durch eine Beschleunigung entlang der Achse 14 keine bzw. nur eine vernachlässigbar geringe Auslenkung der feststehenden Elektrode 13 erfolgt. Ebenfalls im Querschnitt der Figur 2 ist die seismische Masse 15 zu erkennen, die ebenfalls einen Abstand zum Substrat 1 aufweist. Die seismische Masse 15 ist nur durch die Biegefedern 11 und daran befestigte Verankerungsblöcke 10 mit dem Substrat verbunden, so dass sich die seismische Masse 15 relativ zum Substrat beliebig bewegen kann. Die Beweglichkeit der seismischen Masse 15 relativ zum Substrat wird durch die Biegefedern 11 bestimmt. Die Biegefedern 11 sind so ausgelegt, dass in Richtung der Beschleunigungsachse 14 eine besonders einfache Auslenkung erfolgt. Da dazu die Biegefedern 11 besonders lang ausgebildet sind, kann jedoch beim Auftreten von sehr starken Beschleunigungen auch eine Auslenkung in Richtung der Achse 16, wie sie in der Figur 2 gezeigt wird, erfolgen, d.h. senkrecht zum Substrat. Wenn zeitgleich eine starke Beschleunigung in der Achse 16 und eine Komponente in Richtung der Achse 14 auftreten, kann es dabei zu sehr starken Auslenkungen kommen, insbesondere kann es dazu kommen, dass bewegliche Elektroden 12 auf oder hinter den jeweiligen feststehenden Elektroden 13 zu Liegen kommen und so ein Verhaken der Strukturen ineinander bewirkt wird. Um dieses Verhaken zu vermeiden, wird erfindungsgemäß die Kappe 4 mit einem Anschlag 6 versehen, der die Auslenkung der seismischen Masse 15 in der Achse 16, d.h. senkrecht zum Substrat begrenzt.

In der Figur 2 ist im Querschnitt die Kappe 4 zu erkennen, die mittels Verbindungsschichten 5 mit dem Rahmen 3 verbunden ist. Durch die Verbindungsschichten 5 wird dabei eine feste Verbindung zwischen der Kappe 4 und dem Rahmen 3 hergestellt, insbesondere wird es so ermöglicht, eine luftdichte Verbindung zwischen der Kappe 4 und dem Rahmen 3 herzustellen. Dies ermöglicht es, das bewegliche Element 2 in einem definierten Druck einzuschließen. Im Bereich der seismischen Masse 15, d.h. im Bereich der beweglichen Struktur 2 ist der Anschlag 6 vorgesehen. Die übrigen Bereiche der Abdeckkappe 4 sind in ihrer Dicke verringert, indem dort Ausnehmungen 7 vorgesehen sind. Die Kappe 4 weist somit nur in dem Verbindungsbereich 8, in dem sie mit dem Rahmen 3 verbunden ist und im Bereich des Anschlags 6 ihre volle Dicke auf, die restlichen Bereiche sind durch Ausnehmungen 7 abgedünnt, so dass in diesem Bereich der Abstand zwischen den mikromechanischen Strukturen und der Abdeckkappe 4 größer ist. Durch die Ausnehmung 7 wird das Volumen des Luftraums in dem die Struktur eingeschlossen ist vergrößert. Prozeßschwankungen die einen Variation des Abstandes zwischen Abdeckkappe 4 und Substrat 1 bewirken führen daher zu nur einer geringen Veränderung des Drucks eines eingeschlossenen Gases.

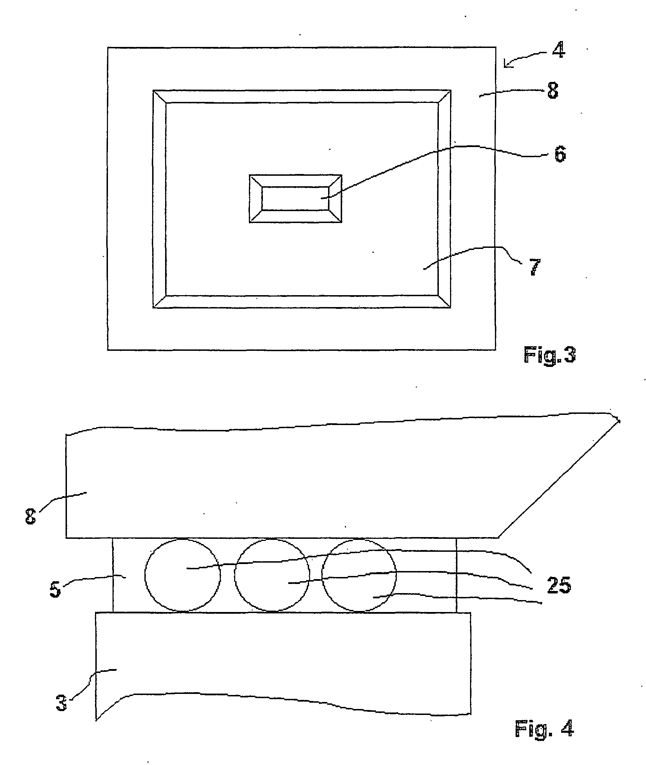

In der Figur 3 wird eine Unteransicht der Abdeckkappe 4 gezeigt. Die Kappe 4 ist in etwa rechteckig ausgebildet, in einem Mittelbereich ist der Anschlag 6 vorgesehen, der vollständig von einer Ausnehmung 7 umgeben ist. Im äußeren Bereich der Abdeckkappe 4 ist ein Verbindungsbereich 8 vorgesehen, der in etwa die gleichen geometrischen Abmessungen wie der Rahmen 3 der Figur 1 aufzeigt. Dieser Verbindungsbereich 8 ist zur Verbindung mit dem Rahmen 3 mittels der Verbindungsschichten 5 gedacht.

Wie im Querschnitt der Figur 2 bzw. der Unteransicht der Figur 3 zu erkennen ist, sind die Übergangsbereiche zwischen dem äußeren Rand der Abdeckkappe 4 und der Ausnehmung 7 bzw. die Übergangsbereiche zwischen dem Anschlag 6 und der Ausnehmung 7 als Schrägen ausgebildet. Dies liegt darin begründet, dass als Beispiel für eine Abdeckkappe 4 ein Siliziumsubstrat verwendet wurde, welches durch anisotropes Ätzen bearbeitet wurde. Beim anisotropen Ätzen von Silizium entstehen typischerweise schräge Übergangsbereiche die durch die Kristallstruktur der Siliziumplatte bedingt sind. Es sind jedoch alle anderen Arten von Materialien für die Abdeckplatte denkbar, d.h. neben Silizium können auch andere Materialien wie Glas, Keramik oder dergleichen verwendet werden. Die Strukturierung von Glas oder Keramik erfolgt dann mit anderen Ätzprozessen, beispielsweise Trockenätzprozessen oder entsprechend anderen naßchemischen Ätzverfahren.

Im Beispiel der Figuren 1 bis 3 wird vorgesehen, dass die Abdeckplatte 4 in ihrem Verbindungsbereich 8 und im Bereich des Anschlags 6 die gleiche Dicke aufweist. Der Abstand zwischen dem Anschlag 6 und der seismischen Masse 15 wird somit durch die Dicke der Verbindungsschicht 5 fest vorgegeben.

In der Figur 4 wird eine Methode gezeigt, wie der Abstand der Verbindungsschicht 5 zwischen dem Rahmen 3 und dem Verbindungsbereich 8 der Abdeckkappe 4 mit großer Präzision einstellbar ist. Dazu sind im Material der Verbindungsschicht 5 Abstandskugeln 25 eingebettet, die einen definierten Durchmesser haben. Als Material für die Verbindungsschicht 5 werden beispielsweise Klebstoffe oder Glasschichten verwendet, die dann aufgeschmolzen werden. Die Dicke der Schicht wird dann durch den Durchmesser der Abstandskugeln 25 bestimmt.

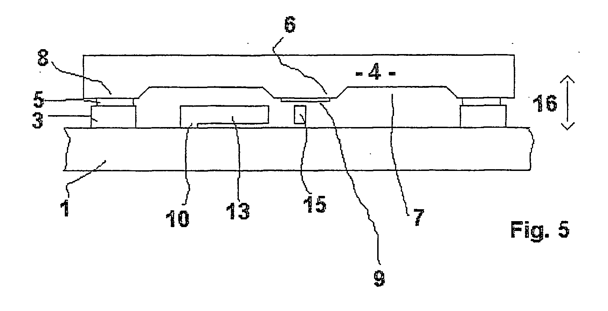

In der Figur 5 wird ein weiteres Mittel dargestellt, welches geeignet ist, den Abstand zwischen dem Anschlag 6 und dem beweglichen Element bzw. der seismischen Masse 15 zu beeinflussen. Dazu ist im Bereich des Anschlags 6 eine zusätzliche Abstandsschicht 9 vorgesehen, die von ihrer Dicke her dünner ausgelegt ist als die Verbindungsschicht 5. Der Abstand zwischen dem Anschlag 6 und der seismischen Masse 15 kann so auch auf geringere werte als die Dicke der Verbindungsschicht 5 eingestellt werden. Diese Vorgehensweise ist dann vorteilhaft, wenn die Dicke der Verbindungsschicht 5 relativ groß ist, insbesondere wenn die Dicke der Verbindungsschicht 5 größer ist als die Dicke der beweglichen Struktur 2 in der Richtung senkrecht zum Substrat. Ansonsten entspricht das mikromechanische Bauelement, das in der Figur 5 gezeigt wird, dem Aufbau, wie er bereits in der Figur 2 gezeigt und beschrieben wurde. Die zusätzliche Schicht 9 kann zusätzlich zu den Abstandskugeln 25 der Figur 4 verwendet werden.

## Patentansprüche

1. Mikromechanisches Bauelement mit einem Substrat (1) und einer auf der Oberfläche des Substrats (1) angeordneten beweglichen Struktur (2), die parallel zur Oberfläche des Substrats (1) beweglich ist,
- wobei die Struktur (2) von einem auf der Oberfläche des Substrats (1) angeordneten Rahmen (3) umgeben ist und mit einer Abdeckkappe (4), die mit dem Rahmen (3) verbunden ist und die sich über der beweglichen Struktur (2) erstreckt,
- wobei die Abdeckkappe (4) im Bereich der beweglichen Struktur (2) einen Anschlag (6) aufweist, der eine Bewegung der beweglichen Struktur (2) in einer Richtung senkrecht zur Oberfläche des Substrats (1) begrenzt,
- wobei die Abdeckkappe (4) aus einer Platte, insbesondere einer Siliziumplatte, herausstrukturiert vorgesehen ist,
**dadurch gekennzeichnet, dass**
- der Anschlag (6) von einer Ausnehmung (7) umgeben ist,
- der Rahmen (3) durch eine Verbindungsschicht (5) mit der Abdeckkappe (4) hermetisch dicht verbunden ist,
- und daß in der Verbindungsschicht (5) Abstandskugeln (25) mit definiertem Durchmesser vorgesehen sind, durch die die Dicke der Verbindungsschicht (5) eingestellt wird.

2. Mikromechanisches Bauelement nach Anspruch 1, **dadurch gekennzeichnet, dass** die Abdeckkappe (4) durch Einbringen mindestens der einen Ausnehmung (7) in der Platte ausgebildet ist, dass durch die Ausnehmung (7) der Anschlag (6) und ein Verbindungsbereich (8) definiert werden und dass die Platte, aus der die Abdeckkappe (4) herausstrukturiert ist im Anschlag (6) und im Bereich des Verbindungsbereichs (8) die gleiche Dicke aufweisen.

3. Mikromechanisches Bauelement nach einem der vorhergehenden Ansprüche, **dadurch gekennzeichnet, dass** auf der Abdeckkappe (4) im Bereich des Anschlags (6) mindestens eine zusätzliche Schicht (9) aufgebracht ist, um einen Abstand zwischen dem Anschlag (6) und der beweglichen Struktur (2) einzustellen.

## Claims

1. Micromechanical component with a substrate (1) and a movable structure (2), which is arranged on the surface of the substrate (1) and is movable parallel to the surface of the substrate (1),
- the structure (2) being surrounded by a frame (3), arranged on the surface of the substrate (1) and having a covering cap (4), which is connected to the frame (3) and extends over the movable structure (2),
- the covering cap (4) having in the region of the movable structure (2) a stop (6), which limits movement of the movable structure (2) in a direction perpendicular to the surface of the substrate (1),
- the covering cap (4) being provided by structuring from a wafer, in particular a silicon wafer,
**characterized in that**
- the stop (6) is surrounded by a recess (7),
- the frame (3) is connected to the covering cap (4) in a hermetically sealed manner by a connecting layer (5),
- and **in that** spacer beads (25) of a defined diameter are provided in the connecting layer (5), by which the thickness of the connecting layer (5) is set.

2. Micromechanical component according to Claim 1, **characterized in that** the covering cap (4) is formed by introducing at least one recess (7) into the wafer, **in that** the stop (6) and a connecting region (8) are defined by the recess (7) and **in that** the wafer from which the covering cap (4) is structured has the same thickness in the stop (6) and in the region of the connecting region (8).

3. Micromechanical component according to one of the preceding claims, **characterized in that** at least one additional layer (9) is applied to the covering cap (4) in the region of the stop (6) in order to set a distance between the stop (6) and the movable structure (2).

## Revendications

1. Composant micromécanique comportant un substrat (1) dont la surface comporte une structure (2) mobile parallèlement à la surface du substrat (1),
la structure (2) étant entourée par un cadre (3) sur la surface du substrat (1) et un couvercle (4) relié au cadre (3) et s'étendant sur la structure mobile (2),
le couvercle (4) ayant une butée (6) dans la zone de la structure mobile (2), pour en limiter le mouvement dans une direction perpendiculaire à la surface du substrat (1),
le couvercle (4) étant dégagé par mise en structure d'une plaque, notamment d'une plaque en silicium,
**caractérisé en ce que**
- la butée (6) est entourée par une cavité (7),
- le cadre (3) est relié de manière hermétique au couvercle (4) par une couche de liaison (5), et
- la couche de liaison (5) comporte des billes d'écartement (25) de diamètre défini qui règlent l'épaisseur de la couche de liaison 5.

2. Composant micromécanique selon la revendication 1,
**caractérisé en ce que**
le couvercle (4) est réalisé dans la plaque en y faisant au moins une cavité (7),
la cavité (7) définit la butée (6) et la zone de liaison (8), et
la plaque dont on a dégagé le couvercle (4) par mise en structure, présente la même épaisseur au niveau de la butée (6) et de la zone de liaison (8).

3. Composant micromécanique selon l'une des revendications précédentes,
**caractérisé en ce qu'**
au niveau de la butée (6), on a appliqué au moins une couche supplémentaire (9) sur le couvercle (4) pour régler la distance entre la butée (6) et la structure mobile (2).
